# EUROPEAN PATENT SPECIFICATION

(11) **EP 2 238 730 B1**
(45) Date of publication and mention of the grant of the patent: **28.09.2016**
(21) Application number: 09705142.9
(22) Date of filing: 23.01.2009
(51) Int. Cl.: H04L 29/06, H04W 12/02

(54) **METHOD FOR THE REMOTE MANAGEMENT OF MOBILE DEVICES AND MOBILE DEVICE SUITED THERETO**
VERFAHREN ZUR FERNVERWALTUNG MOBILER GERÄTE UND FÜR DIESES VERFAHREN ANGEPASSTES MOBILES GERÄT
PROCÉDÉ DE GESTION À DISTANCE DE DISPOSITIFS MOBILES ET DISPOSITIF MOBILE ADAPTÉ

(30) Priority: 30.01.2008 IT PN20080005
(43) Date of publication of application: 13.10.2010
(73) Proprietor: Infinite S.R.L., 31044 Montebelluna (IT)
(72) Inventor: BOF, Patrizio, I-31044 Montebelluna (IT)
(74) Representative: Gonella, Mario
(86) International application number: PCT/EP2009/050766
(87) International publication number: WO 2009/095354

(56) References cited:
- US-A1- 2002 069 259
- US-A1- 2004 010 579
- US-A1- 2006 236 325

## Description

### TECHNICAL FIELD OF THE INVENTION

The present invention refers to a method for the remote management of mobile devices and a mobile device suiting such method, wherein the management of such devices is in particular addressed to the overall security of the data contained in said devices.

### BACKGROUND ART

The technical evolution that has accompanied the development of mobile devices in general throughout these last few years, has enabled the data processing and storage capacities of such devices to be increased to a considerable extent, jointly with the number of on-board peripheral units that they are capable of accommodating, thereby converting such devices into increasingly performing tools. As a result, mobile devices have been rapidly widely used both in corporate environments, with the aim to improve efficiency, and at a personal level for leisure and similar purposes.

Mobile device categories, which reference is generally made to in this specification, include, for instance, such devices as the so-called PDA's, or Personal Digital Assistants, Smartphones, Tablet PCs, and the like.

Each mobile device falling into one of these categories is characterized by a heterogeneity of both hardware and software components, user interfaces and platforms, to the extent that it practically can be considered as a small wireless computer. In particular, all these mobile devices have in common the possibility to make use of a really wide variety of wireless communication interfaces allowing the Internet network to be in any case and any manner acceded to. The various wireless communication technologies, which mobile devices are able to avail themselves of, are such as to complete and integrate each other. These include both broad-band technologies with just a short radius of coverage, or small coverage range, and medium-band or narrow-band technologies, with a large coverage range.

Medium-band and narrow-band technologies include the ones that are typical of mobile radio communications systems, such as GSM, D-AMPS, GPRS, UMTS, 3G, and the like, which are generally known to be able to also provide particular services and features. For example, the GSM mobile telephone network provides the feature of transmitting short messages, the so-called Short Message Service (SMS). Anyway, such SMS feature is currently available even on other networks, such as for example the UMTS telephone network or a stationary telephone network.

As is largely known, mobile radio communications systems comply with definite criteria aimed at ensuring the overall security of conversations in the radio channel, wherein they take particular care in ensuring the authentication and the secrecy of the identity of a user, as well as the secrecy of the data transmitted by the same user.

In general, a smart card, such as the so-called SIM (Subscriber Identity Module) card, is used as a security device for the authentication of the user there. This telephone SIM card is fitted into the mobile device and, when activated, provides the ability to access the services offered by the mobile radio network, thereby enabling the subscriber to use the mobile device itself. The telephone SIM card contains a serial storage, in which there are stored data that include a univocal user identification code, the so-called IMSI (International Mobile Subscriber Identity) code. The administrator of the mobile radio network associates a telephone number to the IMSI code.

A further security level is provided by the mobile device itself, Each mobile device, in fact, is univocally identified by another code, the so-called IMEI (International Mobile Equipment Identity) code, which is permanently stored in the inherent storage of the mobile device directly by the manufacturer. This code is stored in a database by the mobile radio network administrator when the user activates the service.

The need to provide remote management services for mobile devices in general is a basic point in the process of converting a mobile device into a real corporate resource. In fact, actions concerning security are sometimes required to the mobile device which need to be taken in compliance with corporate criteria or, anyway, safeguarding privacy in general. In addition, data and programmes need for example to be able to be downloaded and installed or even disinstalled. Furthermore, installed software shall be able to be periodically updated, as well as configured.

However, definite issues of a technical nature, as anyone skilled in the art is well aware of, must be duly dealt and coped with whenever such ineluctable actions are required. As a result, the task of controlling the mobile device is left with skilled technical personnel qualified in IT matters.

Currently, some telephone companies, the so-called telephone carriers, provide their voice and data communication services on both fixed and mobile telephone networks in wide geographical areas, so as to allow for a widespread, capillary coverage at a worldwide level enabling the mobile device to be reached anywhere with their own services. Mobile devices used in this context may comprise private information or proprietary application programmes of the telephone carrier. The software included in the mobile device may be assigned, installed and configured, as well as automatically updated by the telephone carrier, who - to such purpose - makes use of centralized tools that are characteristic of the telephone system network of the same service provider.

In addition, there exist some structures, such as corporate data-processing or IT systems or other external structures, which are provided to perform control and servicing tasks and activities on mobile devices, wherein this shall be understood as mainly meaning the possibility of installing and configuring software applications. To this purpose, a proprietary application client is installed inside the mobile device.

US 2006/236325 discloses a device client that supports customer care and distribution of update packages to electronic devices and makes it possible to efficiently manage and update firmware and software in electronic devices. A terminal management/device management server employs extensions to an industry standard device management protocol to update configuration information, to provision the electronic device, and to manage the electronic device, for example. The electronic device may receive update packages, and update agent(s) in the electronic device may update the firmware and/or software of the electronic device. A diagnostic client in the electronic device facilitates remote diagnosis and a traps client facilitates setting traps and retrieving collected information. A terminal management server may remotely invoke control actions within the electronic device using management objects not supporter by the industry standard device management protocol. A user of the electronic device may use a self-care portal to administer self-care and to conduct diagnostics. A subsequent customer-care call may use such information collected during self-care.

A drawback that is found when applying the mobile equipment management criteria according to the afore-mentioned examples lies in the constraint represented by the need for highly qualified IT personnel to be called for support each time that a management task involving the mobile device has to be performed.

A further disadvantage relates to the kind of service being offered, which is basically connection-oriented; in other words it means that the mobile device must not only be connected to the network when the service is requested, but also stay connected as long as the same service is being provided.

### DISCLOSURE OF THE INVENTION

It is therefore a main object of the present invention to solve the above-noted problems of prior-art arrangements by providing a method for the remote management of mobile devices and a mobile device suiting such method, wherein the management of the mobile device is left with the end user handling in full autonomy.

Within such general object as stated above, it is a purpose of the present invention to provide a method for the remote management of mobile devices and a mobile device suiting such method, wherein communicating with the mobile device may occur in an asynchronous mode.

Yet another purpose of the present invention is to provide a method for the remote management of mobile devices and a mobile device suiting such method, wherein some functions or operating features may be executed in an automatic manner, i.e. the system is able to detect some influences or alterations in the mobile device by automatically starting appropriate service routines in response thereto.

A further, equally important purpose of the present invention is to provide a method for the remote management of mobile devices and a mobile device suiting such method, which can be implemented and manufactured at competitive costs using readily available production means.

Some advantageous developments and improvements are set forth and defined in the appended claims, wherein special emphasis should be put in this connection on the security aspect concerning the transmission of command signals and data to the mobile device, since such transmission is done using an encrypted protocol.

A further advantage relates to the receipt mode of the command signals in the mobile device, since such command signals are acquired in a silent and invisible mode.

According to the present invention, these aims, advantages, features and peculiarities, along with further ones that will become apparent from the following disclosure, are reached in a method for the remote management of mobile devices and a mobile device suiting such method, which incorporates the characteristics set forth and recited in the appended independent claims and the following sub-claims.

### BRIEF DESCRIPTION OF THE DRAWINGS

Features and advantages of the present invention will anyway be more readily understood from the description of an exemplary embodiment that is given below by way of non-limiting example with reference to the accompanying drawings, in which:
- Figure 1 is a schematic view of the application scenario of the management system of a mobile device;
- Figure 2 is a schematic view of the abstraction levels of the client application programme;
- Figure 3 is a view of a flow chart showing schematically the activation routine for controlling the mobile device;
- Figure 4 is a view of a flow chart showing schematically the mobile device management routine;
- Figure 5 is a view of a flow chart showing schematically the routine for detecting the changing of a phone SIM card within the mobile device; and
- Figure 6 is a schematic view illustrating the replacement of a phone SIM card in a mobile device.

### DETAILED DESCRIPTION OF THE INVENTION

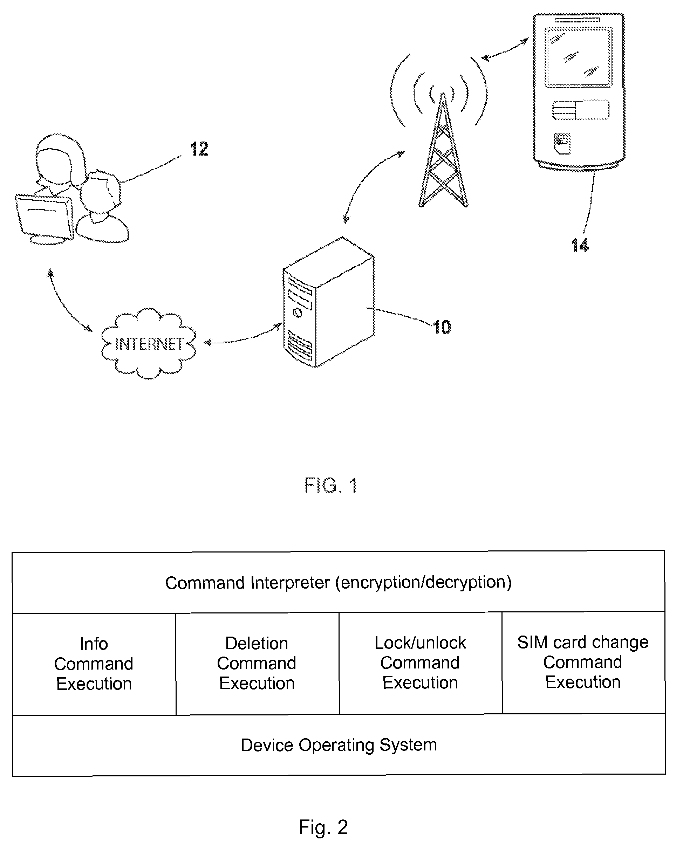

With reference to Figure 1, the management system of a mobile device comprises: at least a workstation 12, such as for instance a desktop or portable personal computer; a remote service centre 10; and at least a mobile device 14. The elements included in the management system of a mobile device, as cited hereabove, rely on and connect to the Internet network and a mobile telephone network via usual interfaces and technologies so as to form a so-called telematic circuit.

The workstation 12 comprises at least one programme for displaying and interacting with Web pages, which shall be generally referred to as "browser" hereinafter.

The remote service centre 10 is a data processing and storage unit that provides a Web portal enabling registered users, as referred to as "end users" hereinafter, to manage the mobile device 14 in an autonomous and reliable manner from a workstation 12, with a wide range of services and contents. The remote service centre 10 comprises tools for transmitting pre-defined command signals to the mobile device 14 via a mobile radio network, such as for instance the GMS mobile telephone network, in which such command signals are preferably encapsulated according to an asynchronous mobile radio communication standard, such as for instance the SMS standard. The remote service centre 10 makes further use of encryption and decryption tools for the signals being transmitted to and received by, respectively, the mobile device 14 via the mobile telephone network.

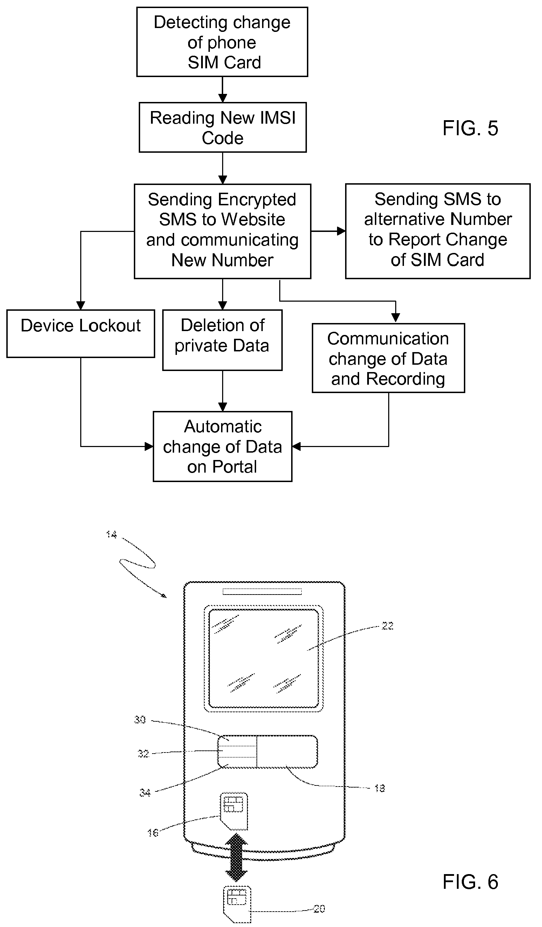

The mobile device 14 comprises a display 22, a data storage carrier 18 subdivided into a plurality of segments, and a first SIM phone card 16 (Figure 6) inserted in a proper receptacle. The first SIM phone card 16 is activated, so that a first telephone number is associated to a first IMSI code stored in the first SIM phone card 16.

The mobile device 14 is able to communicate with the remote service centre 10 via the mobile radio communication network, in which the transmitted signals are preferably encapsulated according to an asynchronous mobile radio communication standard, such as for instance the SMS standard.

The mobile device 14 includes a client application programme integrating at a low level with an operating system installed in the mobile device 14, with reference to an assumedly hierarchical structure of the same operating system. Such client application programme residing in the mobile device 14 is not visible in the list of installed applications.

With reference to Figure 2, the client application programme comprises modules for decrypting and encrypting the signals being received by and transmitted to, respectively, the remote service centre 10 via the mobile telephone network. The level of the client application programme lying therebelow comprises modules for the interpretation of the thus decrypted command signals, thereby bringing to completion a management activity of the mobile device 14 involving the operating system. Therefore, the client application programme itself forms an interface between the command signals being exchanged to and from the service centre 10 and the operating system. The client application programme further comprises modules for the execution of particular processes in response to given events, as this shall be explained in greater detail further below.

The client application programme uses the data storage carrier 18 to preserve some types of data, as they shall be specified in greater detail further below. In addition, the client application programme is able to automatically acquire - if required - some characteristics of the mobile device 14, along with some types of data, such as a univocal identity code of the mobile device 14, i.e. the IMEI code.

The client application programme may be downloaded into the mobile device using the routine that is described below.

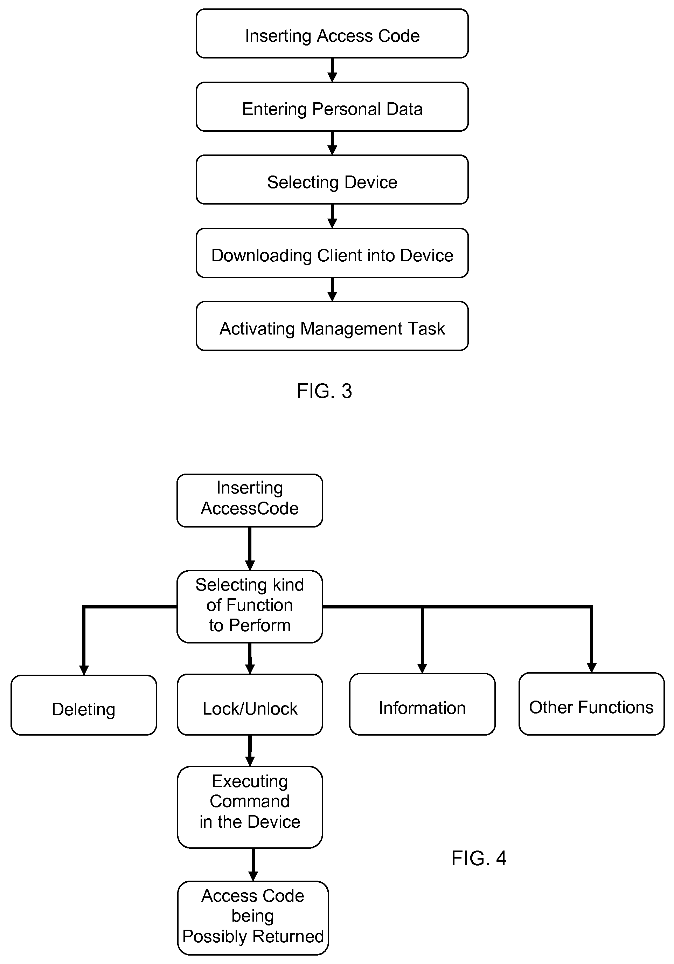

With reference to Figure 3, from the workstation 12 interconnected with the Internet, the end user is able to display a Web page of the portal provided by the remote service centre 10, which can then be used by the end user to insert a service access code into a mask and send it to the service centre 10 through the browser.

Such service access code will include the personal identification data of the end user, which may consist for instance of an identification code, a password and a control code, and is for example available from a physical card, on-line or in a media-supported form. The service activation code enables to access the service centre 10 in a protected and controlled manner, for example by having a database of the same service centre 10 interrogated accordingly.

Subsequently, the end user may display a further Web page of the portal of the remote service centre 10 within the browser. This Web page will contain a first mask, a plurality of kinds of mobile devices, a second mask, a third mask, and a fourth mask. The end user will therefore be able to insert the required personal data, such as for instance name, surname, and so on, within the first mask, and select, among those listed, the kind of mobile device corresponding to the one that has to be managed and controlled. Thereafter, the end user will be able to send such information to the service centre 10 through the browser.

Furthermore, the end user will be able to insert the IMEI code of the mobile device 14 into the second mask, whereas he/she will be able to insert the first telephone number associated to the first SIM telephone card 16 into the third mask, and eventually send such information to the service centre 10 through the browser. In addition, upon selecting a personal password, which shall be referred to as PIN hereinafter and which can be for instance a five-digits code, the end user will be able to insert it into the fourth mask and send such information to the service centre 10 through the browser.

The required personal data, the IMEI code, the first telephone number and the PIN are stored in a database of the service centre 10 in a mutually matching arrangement.

Having acquired the first telephone number of the mobile device 14, the service centre 10 is able to establish, as a result, a connection with the mobile device 14 via the mobile telephone network. Hence, by sending the download request to the service centre 10 through the browser, it is possible to transfer the client application programme from the service centre 10 into the mobile device 14.

In a modified embodiment of the present invention, the client application programme may be downloaded from the same service centre 10 by transmitting the corresponding download request to the service centre 10 through a SMS message containing a special link.

In further modified embodiments of the present invention, other technologies for the distribution of the client application programme, such as the WapProvisioning, or other Over-The-Air (OTA) distribution mechanisms, are considered.

In all cases, the client application programme will install automatically at the end of the data transfer process into the mobile device 14.

Upon conclusion of such self-installation procedure, the client application programme will automatically copy the first IMSI code contained in the first SIM telephone card 16 into a first segment 30 of the memory or data storage carrier 18 of the mobile device 14.

However, the encrypted command signal that may reach the mobile device 14 from the service centre 10 is ignored for the time being, although the client application programme is correctly installed. In fact, the mobile device management system must be activated by means of an activation routine that shall be described below.

Through the browser, the end user sends the activation request to the service centre 10. As a consequence, from the service centre 10 an activation signal is automatically routed to the mobile device 14. This activation signal is encrypted with a key that is traceable and recoverable by the client application programme, so that the latter is able to decrypt the same signal.

The resulting decrypted activation signal provides the IMEI code as previously stored in the database of the service centre 10 in an encrypted form that can be unlocked by means of the PIN code and a cryptographic key generated at the service centre 10. This cryptographic key is unique for each single mobile device 14.

Thereafter, the end user is requested to enter the PIN into a field of a dialogue window capable of being displayed on the display 22 of the mobile device 14, to enable the IMEI code to be decrypted. Such request for the PIN to be first entered is basically aimed at avoiding fraudulent activation, or an activation without the prior consent of the end user.

Following this, the client application programme acquires the IMEI code stored in the mobile device 14 by the manufacturer, and compares it with the IMEI code that has been decrypted via the PIN; if the two codes are found to be the same, then the cryptographic key is stored in a second segment 32 of the storage carrier 18, while a message confirming the activation is displayed in a dialogue window on the display 22. In addition, a signal of successful activation encrypted with the just stored cryptographic key is transmitted to the service centre 10 by the mobile device 14. This successful activation signal contains some characteristics of the mobile device 14, such as for instance the first IMSI code, the type and version of the operating system, the provision of a GPS, the provision of a photographic camera, the state of the battery, the state of the memory, and the like, thereby giving proof of the fact that the activation signal has been executed correctly.

From now on, the cryptographic key is used by both the client application programme residing in the mobile device 14 to encrypt and decrypt all signals being transmitted to and received by, respectively, the service centre 10 via the mobile radio network, and the remote service centre 10 to encrypt and decrypt all signals being transmitted to and received by, respectively, the mobile device 14 via the same mobile radio network.

The security of the communications in the radio channel, therefore, is ensured by virtue of the communication protocol being encrypted with a distinct cryptographic key for each single mobile device 14; in particular, it is practically impossible for any command signal to be imparted to the mobile device 14 if the related cryptographic key is not known.

Otherwise, if the IMEI code that is stored in the mobile device 14 by the manufacturer is different from the IMEI code that has been decrypted through the PIN, the activation procedure fails, while a corresponding warning message is displayed in the dialogue window of the display 22.

All activation messages that would possibly flow in after the first one are automatically rejected, so that it will not be possible for the cryptographic key stored in the second segment of the memory carrier 18 to be changed.

In a further modified embodiment of the present invention, it is contemplated that the end user is able to transmit the activation request to the service centre 10 from the mobile device 14, the procedure to be followed thereupon remaining unaltered.

Figure 4 schematically illustrates the flow chart of the management process for a mobile device 14, which has been activated according to the afore-described activation procedure and, hence, is controllable by the end user.

From the workstation 12, the end user can let the Web page of the portal provided by the service centre 10 be displayed on the display, so as to be able to enter the service access code into the related mask and send it to the service centre 10 through the browser.

Thereupon, the end user can let a further Web page of the portal provided by the service centre 10 be displayed within the browser. This further Web page will contain a plurality of alternative tasks and operations to be selected therefrom for the management of the mobile device 14. These management tasks may include, for instance, cancelling or backing up the data contained in the mobile device 14, locking and unlocking the mobile device 14, executing applications inside the mobile device 14, and so on, i.e. all tasks needed to control, check up and manage the mobile device 14 altogether.

Furthermore, there is provided a task to deactivate the mobile device 14. In this particular case, the cryptographic key in the second segment 32 of the memory carrier 18 is cancelled upon the client application programme interpreting a deactivation command signal.

In addition, there are provided some function modes to be executed in an automatic manner in case the first telephone SIM card 16 is replaced with a second telephone SIM card 20 (Figure 6) inside the mobile device 14, as this shall be described in greater detail further on.

Therefore, the end user can send to the service centre 10 the management task selected through the browser. In the case of an ordinary management mode, the service centre 10 will then transmit an encrypted command signal associated to the selected management task to the mobile device 14. In the case of an automatic management mode relating to a replacement of the telephone SIM card, the service centre 10 will only transmit the encrypted command signal to the mobile device 14 at the occurrence of the event.

By virtue of the particular mobile radio communication standard used between the service centre 10 and the mobile device 14 according to the present invention, the encrypted command signal may be defined as being asynchronous. In fact, it can be executed in the mobile device at a later moment following the actual request for the desired management task having been sent in.

The encrypted command signal is received in the mobile device 14 in a silent and invisible mode, without any related sound signal or any such signal of any other nature being emitted from the mobile device 14 itself. This feature can prove quite useful, for example in the case of a theft. The end user, in fact, can start an action to lock the stolen mobile device 14 from his/her own workstation 12, without this action being capable of being recognized as such until it is fully executed.

Thereafter, the encrypted command signal is acquired by the client application programme. As a result, it is decrypted with the cryptographic key, interpreted and executed by the client application programme interfacing with the operating system.

This action can be reported to the end user. To this purpose, the control code is automatically transmitted by the mobile device 14 to the service centre 10. Thereupon, the service centre 10 sends out a related notice, for instance in the form of an e-mail or a SMS, to a pre-defined e-mail address or cellular phone number, as the case may be.

The management system of a mobile device according to the present invention is configured so as to be able to detect some influences taking place in, or alterations affecting, the mobile device 14, and to automatically start appropriate corrective or service routines in response thereto. More particularly, the client application programme includes further procedures that start a process in which a sequence of activities is enabled to be carried out by several parts of the mobile device management system, in view of detecting a replacement of the telephone SIM card inside the mobile device 14.

With reference to Figures 5 and 6, each time that the mobile device 14 is switched on, the IMSI code stored in the telephone SIM card that is inserted in the mobile device 14 is acquired and then compared with the first IMSI code that has been previously stored in the first segment 30 of the memory carrier 18; if such comparison tells that the two codes are alike, this will mean that the first telephone SIM card 16 has not been replaced in the mobile device 14 and the process started to detect a replacement of the first telephone SIM card 16 is terminated.

Conversely, if such comparison tells that the two codes differ from each other, this will mean that the first telephone SIM card 16 has been replaced in the mobile device 14 with a second telephone SIM card 20. As a result, an encrypted SIM change signal containing the IMEI code of the mobile device 14 is sent by the mobile device 14 to the service centre 10. Associated to such SIM change signal there is a second telephone number relating to the second telephone SIM card 20; therefore, as from inference for the transitive property, the IMEI code is associated to the second telephone number.

In the database of the service centre 10, however, the IMEI code will still correspond to the telephone number relating to the first telephone SIM card 16, which is not being used any longer. As a result, the management system of the mobile device requires to be updated, so that it can recognize which is the current telephone number which the encrypted command signals have to be sent to.

At the service centre 10, therefore, the second telephone number relating to the second telephone SIM card 20 is now stored in the place of the first telephone number relating to the first telephone SIM card 16.

Similarly, in the mobile device 14 the first segment 30 of the storage carrier 18 containing the first IMSI code of the first telephone SIM card 16 is replaced by a second IMSI code of the second telephone SIM card 20.

Once the update procedure is concluded at the service centre 10, an encrypted command signal, with the management task previously selected by the end user associated thereto, is automatically transmitted from the service centre 10 to the mobile device 14.

Such management tasks may for instance include the default lockout of the mobile device 14, the cancellation of entered data, or the afore-cited reporting through the delivery of an e-mail or a SMS to a pre-defined e-mail address or cellular phone number, respectively, thereby enabling the end user to decide on which action he/she shall take at the moment, in accordance with what is provided for by the management of the signals to the mobile device according to the present invention.

The replacement of the telephone SIM card may be reported to the end user with a similar procedure as the one used to give notice of the execution of the command in the mobile device 14, so that any further description is omitted.

In a third segment 34 of the storage carrier 18 there is stored a list of telephone SIM cards which, if inserted in the mobile device 14, do not give rise to any activation of the above-described phone SIM card change procedure. Such phone SIM card change procedure will therefore be only started upon insertion of a phone SIM card whose IMSI code is not included in the stored list. Such list is updated through an encrypted command signal sent by the service centre 10, which is provided with the updated list. Such command may also be used to manage intentionally-made phone SIM card changes.

Fully apparent from the above description is therefore the ability of a method for the remote management of mobile devices and a mobile device suiting such method according to the present invention to reach the afore-stated aims and advantages. It has been in fact conceived a method for the remote management of mobile devices and a mobile device suiting such method wherein the end user is fully capable of managing and controlling his/her own mobile device 14 from a workstation 12 in a self-service operating mode; furthermore, some influences or alterations occurring in the mobile device 14 are capable of being automatically detected by the system, which in turn causes appropriate service routines to be executed as a response thereto, so as to activate the mobile device management functionality that has been pre-established by the end user, as in the case of a replacement of the phone SIM card.

It will anyhow be appreciated that both the method and the device according to the present invention may be subjected to a number of modifications, directed at a number of different applications, and be embodied in a number of different manners without departing from the scope of the present invention, and that the various embodiments and variants thereof as described above may be used both individually or in any combination thereof.

## Claims

1. Method for the remote management of mobile devices, comprising the following steps:
- transmitting an access code from a workstation (12) to a service centre (10), said workstation (12) and said service centre (10) being interconnected to a telematic network;
- checking the authenticity of the access code at the service centre (10);
- transmitting the personal data of an end user from the workstation (12) to the service centre (10);
- storing said personal data in a memory at the service centre (10);
- selecting a desired type of mobile devices and sending such selected type of mobile devices from the workstation (12) to the service centre (10);
- transmitting a univocal identification code stored in a mobile device (14) by the manufacturer, a first telephone number and a personal password from the workstation (12) to the service centre (10), said mobile device (14) being provided with a first activated phone SIM card (16), said first telephone number being associated to said first activated phone SIM card (16);
- storing said univocal identification code stored in the mobile device (14), the first telephone number and the personal password in a memory at the service centre (10), said univocal identification code stored in the mobile device (14), said first telephone number and said personal password being mutually associated;
- sending a request from the workstation (12) to the service centre (10) for downloading a client application programme into the mobile device (14);
- downloading and installing the client application programme from the service centre (10) in the mobile device (14), said client application programme being self-installing;
- copying into the mobile device (14) a first IMSI code contained in a first phone SIM card (16) to a first segment (30) of a storage carrier (18) of the mobile device (14);
- sending a request for activating the mobile device (14) from the workstation (12) to the service centre (10);
- transmitting an activation signal encrypted in a first encryption mode from the service centre (10) to the mobile device (14), said signal comprising a cryptographic key and an encrypted univocal identification code corresponding to the univocal identification code as previously stored at said service centre (10) encrypted in a second encryption mode, said mobile device (14) being interconnected with the telematic network;
- decrypting the encrypted activation signal through the client application programme in the mobile device (14) and extracting said cryptographic key and said encrypted univocal identification code;
- decrypting said encrypted univocal identification code by entering the personal password in the mobile device (14) to obtain a decrypted univocal identification code;
- comparing in the mobile device (14) said decrypted univocal identification code with said univocal identification code stored in the mobile device (14);
- storing the cryptographic key in the mobile device (14) in a second segment (32) of the storage carrier (18) when said decrypted univocal identification code equals to said univocal identification code stored in the mobile device (14), and
- transmitting a successful activation signal encrypted with the cryptographic key and containing some characteristics of the mobile device (14) from the mobile device (14) to the service centre (10);
- checking the successful activation signal at the service centre (10);
- controlling the mobile device (14) from the workstation (12), said mobile device (14) being activated.

2. Method for the remote management of mobile devices according to claim 1, wherein controlling the mobile device (14) comprises the following steps:
- transmitting the access code from the workstation (12) to the service centre (10);
- checking the authenticity of the access code at the service centre (10);
- selecting a management task of the mobile device (14) and sending the selected management task from the workstation (12) to the service centre (10);
- transmitting a command signal encrypted with the cryptographic key from the service centre (10) to the mobile device (14), said command signal being associated to the management task of the mobile device (14);
- decrypting the command signal encrypted in the mobile device (14) with the cryptographic key;
- interpreting and automatically executing the command signal in the mobile device (14), thereby performing the management activity of the mobile device (14).

3. Method for the remote management of mobile devices according to claim 2, wherein a command signal encrypted with the cryptographic key is associated to a management task of the mobile device (14) to be executed automatically when a replacement of a first phone SIM card (16) with a second phone SIM card (20) occurs in the mobile device (14).

4. Method for the remote management of mobile devices according to claim 3, wherein detecting the replacement of the phone SIM card comprises following steps:
- comparing in the mobile device (14) the IMSI code stored in the first segment (30) of the memory carrier (18), upon turning it on, with a second IMSI code contained in the second phone SIM card (20);
- checking in the mobile device (14) if the IMSI code stored in the first segment (30) of the memory carrier (18) differs from the second IMSI code contained in the second phone SIM card (20);
- transmitting a SIM card change signal, as encrypted with the cryptographic key, from the mobile device (14) to the service centre (10), wherein said signal comprises the univocal identification code of the mobile device (14) and is associated to a second telephone number associated to said second phone SIM card (20);
- replacing at the service centre (10) the first telephone number associated to the first phone SIM card (16) with the second telephone number associated to said second phone SIM card (20), both said first telephone number and said second telephone number being associated to the univocal identification code of the mobile device (14);
- replacing in the mobile device (14) the first IMSI code of the first phone SIM card (16) with the second IMSI code of the second phone SIM card (20) in the first segment (30) of the memory carrier (18);
- transmitting from the service centre (10) the command signal encrypted with the cryptographic key associated to the pre-established management mode of the mobile device (14) as provided for the replacement of the first phone SIM card (16) with the second phone SIM card (20);
- decrypting in the mobile device (14) the command signal encrypted with the cryptographic key;
- interpreting and automatically executing in the mobile device (14) the command signal, thereby performing the management activity of the mobile device (14).

5. Method for the remote management of mobile devices according to any of the preceding claims, wherein the access code comprising an identification code, a password and a control code is available in at least one of the distribution modes including an on-line transmission, the use of a physical card or a media-supported, said access code being adapted to allow a protected access to the service centre (10).

6. Method for the remote management of mobile devices according to any of the preceding claims, wherein signals exchanged between the service centre (10) and the mobile device (14) are encapsulated according to an asynchronous mobile radio communication standard.

7. Method for the remote management of mobile devices according to claim 6, wherein signals exchanged between the service centre (10) and the mobile device (14) are in accordance with the Short Message Service (SMS) standard.

8. Method for the remote management of mobile devices according to any of the preceding claims, wherein signals exchanged between the service centre (10) and the mobile device (14) are encrypted with the cryptographic key, said cryptographic key being unique to each single mobile device (14).

9. Method for the remote management of mobile devices according to claim 1, wherein the request for downloading the client application programme is sent out by the mobile device (14) through a SMS containing a link.

10. Method for the remote management of mobile devices according to claim 1, wherein the client application programme is distributed in the mobile device (14) using Over-The-Air distribution mechanisms.

11. Method for the remote management of mobile devices according to claim 1, wherein a successful activation message is displayed upon checking the signal of successful activation at the service centre (10).

12. Method for the remote management of mobile devices according to claim 1, wherein a request for activating the mobile device (14) is ignored in an already activated mobile device (14).

13. Method for the remote management of mobile devices according to claim 1, wherein the activation request is sent out by the mobile device (14).

14. Method for the remote management of mobile devices according to any of the preceding claims, wherein the mobile device management tasks include a default lockout of the mobile device (14), an unlocking of the mobile device (14), a cancellation of data entered in the mobile device (14), a backup of data in the mobile device (14), a notice of the replacement of the phone SIM card (16) through the delivery of an e-mail to an e-mail address, a notice of the replacement of the phone SIM card (16) through the delivery of a SMS to a phone number.

15. Method for the remote management of mobile devices according to claim 14, wherein the mobile device management tasks further include a mode for deactivating the mobile device (14) providing for the cancellation of the cryptographic key stored in the second segment (32) of the memory.

16. Method for the remote management of mobile devices according to claim 2, wherein the execution of a command in the mobile device (14) is reported through the following steps:
- automatically transmitting the control code from the mobile device (14) to the service centre (10);
- sending out at least one between an e-mail to a pre-established e-mail address and a SMS from the service centre (10) to a pre-established phone number.

17. Method for the remote management of mobile devices according to claims 4 and 16, wherein a replacement of the SIM card (16) is reported.

18. Method for the remote management of mobile devices according to claim 4, wherein a list of SIM cards disregarded by the detection of the replacement of the phone SIM card is stored in a third segment (34) of the memory carrier (18), said list being capable of being updated from the service centre (10).

19. Method for the remote management of mobile devices according to any of the preceding claims, wherein the encrypted command signals are received in a silent manner in the mobile device (14).

20. Method for the remote management of mobile devices according to any of the preceding claims, wherein the client application programme is not visible in the list of the applications installed in the mobile device (14).

21. Mobile device for carrying out the method for the remote management of mobile devices according to any of the preceding claims, **characterized in that** it comprises means adapted to decrypt an encrypted command signal transmitted by a service centre (10), and means adapted to interpret said decrypted command signal and execute said command.

22. Mobile device according to claim 21, wherein a cryptographic key for encrypting and decrypting signals is stored in a segment (32) of a storage carrier (18) upon activation, said cryptographic key being generated in a unique manner by the service centre (10).

## Patentansprüche

1. Verfahren für die Fernverwaltung von Mobileinrichtungen, mit den folgenden Schritten:
- Übertragen eines Zugriffscodes von einem Arbeitsplatzrechner (12) zu einem Dienstleistungszentrum (10), wobei der Arbeitsplatzrechner (12) und das Dienstleistungszentrum (10) mit einem telematischen Netzwerk verbunden sind;
- Prüfen der Authentizität des Zugriffcodes in dem Dienstleistungszentrum (10);
- Übertragen der persönlichen Daten eines Endanwenders von dem Arbeitsplatzrechner (12) zu dem Dienstleistungszentrum (10);
- Speichern der persönlichen Daten in einem Speicher in dem Dienstleistungszentrum (10);
- Auswählen einer gewünschten Art von Mobileinrichtungen und Senden einer derartigen ausgewählten Art von Mobileinrichtungen von dem Arbeitsplatzrechner (12) zu dem Dienstleistungszentrum (10);
- Übertragen eines eindeutigen Identifizierungscodes, der in einer Mobileinrichtung (14) von dem Hersteller gespeichert ist, einer ersten Telefonnummer und eines persönlichen Kennwortes von dem Arbeitsplatzrechner (12) zu dem Dienstleistungszentrum (10), wobei die Mobileinrichtung (14) mit einer ersten aktivierten Telefon-SIM-Karte (16) versehen ist, und wobei die erste Telefonnummer der ersten aktivierten Telefon-SIM-Karte (16) zugeordnet ist;
- Speichern des eindeutigen Identifizierungscodes, der in der Mobileinrichtung (14) gespeichert ist, der ersten Telefonnummer und des persönlichen Kennworts in einem Speicher in dem Dienstleistungszentrum (10), wobei der eindeutige Identifizierungscode, der in der Mobileinrichtung (14) gespeichert ist, die erste Telefonnummer und das erste persönliche Kennwort einander zugeordnet sind;
- Senden einer Anforderung von dem Arbeitsplatzrechner (12) zu dem Dienstleistungszentrum (10) zum Herunterladen eines Klientenanwendungsprogramms in die Mobileinrichtung (14);
- Herunterladen und Installieren des Klientenanwendungsprogramms aus dem Dienstleistungszentrum (10) in die Mobileinrichtung (14), wobei das Klienten Anwendungsprogramm selbst-installierend ist;
- Kopieren eines ersten IMSI-Codes, der in einer ersten Telefon-SIM-Karte (16) enthalten ist, in die Mobileinrichtung (14) und dort in ein erstes Segment (30) eines Speicherträgers (18) der Mobileinrichtung (14);
- Senden einer Anforderung zur Aktivierung der Mobileinrichtung (14) von dem Arbeitsplatzrechner (12) zu dem Dienstleistungszentrum (10);
- Übertragen eines Aktivierungssignals, das in einem ersten Verschlüsselungsmodus verschlüsselt ist, von dem Dienstleistungszentrum (10) zu der Mobileinrichtung (14), wobei das Signal einen kryptographischen Schlüssel und einen verschlüsselten eindeutigen Identifizierungscode aufweist, der dem eindeutigen Identifizierungscode entspricht, der zuvor in dem Dienstleistungszentrum (10) verschlüsselt in einem zweiten Verschlüsselungsmodus gespeichert wurde, wobei die Mobileinrichtung (14) mit dem telematischen Netzwerk verbunden ist;
- Entschlüsseln des verschlüsselten Aktivierungssignals durch das Klientenanwendungsprogramm in der Mobileinrichtung (14) und Extrahieren des kryptographischen Schlüssels und des verschlüsselten eindeutigen Identifizierungscodes;
- Entschlüsseln des verschlüsselten eindeutigen Identifizierungscodes durch Eingabe des persönlichen Kennworts in die Mobileinrichtung (14), um einen entschlüsselten eindeutigen Identifizierungscode zu erhalten;
- Vergleichen des entschlüsselten eindeutigen Identifizierungscodes in der Mobileinrichtung mit dem eindeutigen Identifizierungscode, der in der Mobileinrichtung (14) gespeichert ist;
- Speichern des kryptographischen Schlüssels in der Mobileinrichtung (14) in einem zweiten Segment (32) des Speicherträgers (18), wenn der entschlüsselte eindeutige Identifizierungscode gleich dem eindeutigen Identifizierungscode ist, der in der Mobileinrichtung (14) gespeichert ist, und
- Übertragen eines Erfolgreich-Aktivierungssignals, das mit dem kryptographischen Schlüssel verschlüsselt ist und einige Eigenschaften der Mobileinrichtung (14) enthält, von der Mobileinrichtung (14) zu dem Dienstleistungszentrum (10);
- Prüfen des Erfolgreich-Aktivierungssignals in dem Dienstleistungszentrum (10);
- Steuern der Mobileinrichtung (14) von dem Arbeitsplatzrechner (12) aus, wobei die Mobileinrichtung (14) aktiviert ist.

2. Verfahren für die Fernverwaltung von Mobileinrichtungen nach Anspruch 1, wobei Steuern der Mobileinrichtung (14) die folgenden Schritte umfasst:
- Übertragen des Zugriffscodes von dem Arbeitsplatzrechner (12) zu dem Dienstleistungszentrum (10);
- Prüfung der Authentizität des Zugriffscodes in dem Dienstleistungszentrum (10);
- Auswählen einer Verwaltungsaufgabe der Mobileinrichtung (14) und Senden der ausgewählten Verwaltungsaufgabe von dem Arbeitsplatzrechner (12) zu dem Dienstleistungszentrum (10);
- Übertragen eines Befehlssignals, das mit dem kryptographischen Schlüssel verschlüsselt ist, von dem Dienstleistungszentrum (10) zu der Mobileinrichtung (14), wobei das Befehlssignal der Verwaltungsaufgabe der Mobileinrichtung (14) zugeordnet ist;
- Entschlüsseln des verschlüsselten Befehlssignals in der Mobileinrichtung (14) mit dem kryptographischen Schlüssel;
- Übersetzen und automatisches Ausführen des Befehlssignals in der Mobileinrichtung (14), um die Verwaltungsaktivität der Mobileinrichtung (14) auszuführen.

3. Verfahren für die Fernverwaltung von Mobileinrichtungen nach Anspruch 2, wobei ein Befehlssignal, das mit dem kryptographischen Schlüssel verschlüsselt ist, einer Verwaltungsaufgabe der Mobileinrichtung (14) zugeordnet wird, die automatisch ausgeführt wird, wenn ein Austausch einer ersten Telefon-SIM-Karte (16) durch eine zweite Telefon-SIM-Karte (20) in der Mobileinrichtung (14) erfolgt.

4. Verfahren für die Fernverwaltung von Mobileinrichtungen nach Anspruch 3, wobei Erkennen des Austausches der Telefon-SIM-Karte folgende Schritte umfasst:
- Vergleichen, in der Mobileinrichtung (14), des IMSI-Codes, der in dem ersten Segment (30) des Speicherträgers (18) gespeichert ist, mit einem zweiten IMSI-Code, der in der zweiten Telefon-SIM-Karte (20) enthalten ist, beim Einschalten;
- Prüfen in der Mobileinrichtung (14), ob der in dem ersten Segment (30) des Speicherträgers (18) gespeicherte IMSI-Code sich von dem zweiten IMSI-Code unterscheidet, der in der zweiten Telefon-SIM-Karte (20) enthalten ist;
- Übertragen eines SIM-Karten-Austauschsignals, das mit dem kryptographischen Schlüssel verschlüsselt ist, von der Mobileinrichtung (14) zu dem Dienstleistungszentrum (10), wobei das Signal den eindeutigen Identifizierungscode der Mobileinrichtung (14) enthält und einer zweiten Telefonnummer zugeordnet ist, die der zweiten Telefon-SIM-Karte (20) zugeordnet ist;
- Ersetzen, in dem Dienstleistungszentrum (10), der ersten Telefonnummer, die der ersten Telefon-SIM-Karte (16) zugeordnet ist, durch die zweite Telefonnummer, die der zweiten Telefon-SIM-Karte (20) zugeordnet ist, wobei jeweils die erste Telefonnummer und die zweite Telefonnummer dem eindeutigen Identifizierungscode der Mobileinrichtung (14) zugeordnet sind;
- Ersetzen, in der Mobileinrichtung (14), des ersten IMSI-Codes der ersten Telefon-SIM-Karte (16) durch den zweiten IMSI-Code der zweiten Telefon-SIM-Karte (20) in dem ersten Segment (30) des Speicherträgers (18);
- Übertragen des Befehlssignals aus dem Dienstleistungszentrum (10), wobei das Befehlssignal mit dem kryptographischen Schlüssel verschlüsselt ist, der dem zuvor eingerichteten Verwaltungsmodus der Mobileinrichtung (14) zugeordnet ist, in der bereitgestellten Form für das Ersetzen der ersten Telefon-SIM-Karte (16) durch die zweite Telefon-SIM-Karte (20);
- Entschlüsseln des mit dem kryptographischen Schlüssel verschlüsselten Befehlssignals in der Mobileinrichtung (14);
- Übersetzen und automatisches Ausführen des Befehlssignals in der Mobileinrichtung (14), um die Verwaltungsaktivität der Mobileinrichtung (14) auszuführen.

5. Verfahren für die Fernverwaltung von Mobileinrichtungen nach einem der vorhergehenden Ansprüche, wobei der Zugriffscode, der einen Identifizierungscode, ein Kennwort und einen Steuerungscode umfasst, in mindestens einem der Verteilungsmodi verfügbar ist, die eine On-line-Übertragung, die Verwendung einer physikalischen Karte oder Medien unterstützt sind, beinhalten, wobei der Zugriffscode ausgebildet ist, einen geschützten Zugriff zu dem Dienstleistungszentrum (10) zuzulassen.

6. Verfahren für die Fernverwaltung von Mobileinrichtungen nach einem der vorhergehenden Ansprüche, wobei Signale, die zwischen dem Dienstleistungszentrum (10) und der Mobileinrichtung (14) ausgetauscht werden, entsprechend einem asynchronen Mobilfunkkommunikationsstandard gekapselt sind.

7. Verfahren für die Fernverwaltung von Mobileinrichtungen nach Anspruch 6, wobei Signale, die zwischen dem Dienstleistungszentrum (10) und der Mobileinrichtung (14) ausgetauscht werden, dem Kurznachrichtendienst-(SMS-) Standard entsprechen.

8. Verfahren für die Fernverwaltung von Mobileinrichtungen nach einem der vorhergehenden Ansprüche, wobei Signale, die zwischen dem Dienstleistungszentrum (10) und der Mobileinrichtung (14) ausgetauscht werden, mit dem kryptographischen Schlüssel verschlüsselt werden, wobei der kryptographischen Schlüssel für jede einzelne Mobileinrichtung (14) einzigartig ist.

9. Verfahren für die Fernverwaltung von Mobileinrichtungen nach Anspruch 1, wobei die Anforderung zum Herunterladen des Klientenanwendungsprogramms von der Mobileinrichtung (14) über eine SMS, die eine Verknüpfung enthält, gesendet wird.

10. Verfahren für die Fernverwaltung von Mobileinrichtungen nach Anspruch 1, wobei das Klientenanwendungsprogramm in der Mobileinrichtung (14) unter Anwendung von Funk-Verteilungsmechanismen verteilt wird.

11. Verfahren für die Fernverwaltung von Mobileinrichtungen nach Anspruch 1, wobei eine Erfolgreich-Aktivierungsnachricht beim Prüfen des Signals der erfolgreichen Aktivierung in dem Dienstleistungszentrum (10) angezeigt wird.

12. Verfahren für die Fernverwaltung von Mobileinrichtungen nach Anspruch 1, wobei eine Anforderung für die Aktivierung der Mobileinrichtung (14) in einer bereits aktivierten Mobileinrichtung (14) ignoriert wird.

13. Verfahren für die Fernverwaltung von Mobileinrichtungen nach Anspruch 1, wobei die Aktivierungsanforderung von der Mobileinrichtung (14) gesendet wird.

14. Verfahren für die Fernverwaltung von Mobileinrichtungen nach einem der vorhergehenden Ansprüche, wobei die Mobileinrichtungs-Verwaltungsaufgaben eine voreingestellte Sperrung der Mobileinrichtung (14), eine Entsperrung der Mobileinrichtung (14), eine Löschung von in die Mobileinrichtung (14) eingegebenen Daten, eine Datensicherung in der Mobileinrichtung (14), eine Benachrichtigung über den Austausch der Telefon-SIM-Karte (16) durch Zustellung einer E-Mail zu einer E-Mail-Adresse, eine Benachrichtigung über den Austausch der Telefon-SIM-Karte (16) durch die Zustellung einer SNS zu einer Telefonnummer umfasst.

15. Verfahren für die Fernverwaltung von Mobileinrichtungen nach Anspruch 14, wobei die Mobileinrichtungs-Verwaltungsaufgaben ferner einen Modus für die Deaktivierung der Mobileinrichtung (14) umfasst, der für die Löschung des in dem zweiten Segment (32) des Speichers gespeicherten kryptographischen Schlüssel sorgt.

16. Verfahren für die Fernverwaltung von Mobileinrichtungen nach Anspruch 2, wobei die Ausführung eines Befehls in der Mobileinrichtung (14) durch die folgenden Schritte berichtet wird:
- automatisches Übertragen des Steuerungscodes von der Mobileinrichtung (14) zu dem Dienstleistungszentrum (10);
- Senden einer E-Mail an eine zuvor eingerichtete E-Mail-Adresse und/oder einer SMS aus dem Dienstleistungszentrum (10) zu einer zuvor eingerichteten Telefonnummer.

17. Verfahren für die Fernverwaltung von Mobileinrichtungen nach Anspruch 4 und 16, wobei ein Austausch der SIM-Karte (16) berichtet wird.

18. Verfahren für die Fernverwaltung von Mobileinrichtungen nach Anspruch 4, wobei eine Liste von SIM-Karten, die durch die Erkennung des Austausches der Telefon-SIM-Karte unberücksichtigt sind, in einem dritten Segment (34) des Speicherträgers (18) gespeichert wird, wobei die Liste aus dem Dienstleistungszentrum (10) aktualisierbar ist.

19. Verfahren für die Fernverwaltung von Mobileinrichtungen nach einem der vorhergehenden Ansprüche, wobei die verschlüsselten Befehlssignale in der Mobileinrichtung (14) in stiller Weise empfangen werden.

20. Verfahren für die Fernverwaltung von Mobileinrichtungen nach einem der vorhergehenden Ansprüche, wobei das Klientenanwendungsprogramm in der Liste der Anwendungen, die in der Mobileinrichtung (14) installiert sind, nicht sichtbar ist.

21. Mobileinrichtung zum Ausführen des Verfahrens für die Fernverwaltung von Mobileinrichtungen nach einem der vorhergehenden Ansprüche, **dadurch gekennzeichnet, dass** sie Mittel, die ausgebildet sind, ein verschlüsseltes Befehlssignal, das von einem Dienstleistungszentrum (10) gesendet wird, zu entschlüsseln, und Mittel aufweist, die ausgebildet sind, das entschlüsselte Befehlssignal zu übersetzen und den Befehl auszuführen.

22. Mobileinrichtung nach Anspruch 21, wobei ein kryptographischer Schlüssel für Verschlüsselung und Entschlüsselung von Signalen in einem Segment (32) eines Speicherträgers (18) bei Aktivierung gespeichert wird, wobei der kryptographischen Schlüssel von dem Dienstleistungszentrum (10) so erzeugt wird, dass er einzigartig ist.

## Revendications

1. Procédé de gestion à distance de dispositifs mobiles, comprenant les étapes suivantes :
- la transmission d'un code d'accès à partir d'un poste de travail (12) vers un centre de service (10), ledit poste de travail (12) et ledit centre de service (10) étant interconnecté à un réseau télématique ;
- la vérification de l'authenticité du code d'accès au niveau du centre de service (10) ;
- la transmission des données personnelles d'un utilisateur final à partir du poste de travail (12) vers le centre de service (10) ;
- le stockage desdites données personnelles dans une mémoire au niveau du centre de service (10) ;
- la sélection d'un type de dispositif mobile souhaité et l'envoi d'un tel type de dispositif mobile sélectionné à partir du poste de travail (12) vers le centre de service (10) ;
- la transmission par le fabricant d'un code d'identification univoque stocké dans un dispositif mobile (14), un premier numéro de téléphone et un mot de passe personnel à partir du poste de travail (12) vers le centre de service (10), ledit dispositif mobile (14) étant muni d'une première carte SIM de téléphone (16) activée, ledit premier numéro de téléphone étant associé à ladite première carte SIM de téléphone (16) activée ;
- le stockage dudit code d'identification univoque stocké dans le dispositif mobile (14), le premier numéro de téléphone et le mot de passe personnel dans une mémoire au niveau du centre de service (10), ledit code d'identification univoque stocké dans le dispositif mobile (14), ledit premier numéro de téléphone et ledit mot de passe personnel étant mutuellement associés ;
- l'envoi d'une requête à partir du poste de travail (12) vers le centre de service (10) pour télécharger un programme d'application client dans le dispositif mobile (14) ;
- le téléchargement et l'installation du programme d'application client à partir du centre de service (10) dans le dispositif mobile (14), ledit programme d'application client étant auto-installé ;
- la copie, dans le dispositif mobile (14) d'un premier code IMSI contenu dans une première carte SIM de téléphone (16) vers un premier segment (30) d'un support de mémoire (18) du dispositif mobile (14) ;
- l'envoi d'une demande d'activation du dispositif mobile (14) à partir du poste de travail (12) vers le centre de service (10) ;
- la transmission d'un signal d'activation crypté dans un premier mode de cryptage à partir du centre de service (10) vers le dispositif mobile (14), ledit signal comprenant une clé cryptographique et un code d'identification univoque correspondant au code d'identification univoque préalablement stocké au niveau du centre de service (10) crypté dans un second mode de cryptage, ledit dispositif mobile (14) étant interconnecté avec le réseau télématique ;
- le décryptage du signal d'activation crypté au moyen du programme d'application client dans le dispositif mobile (14) et l'extraction de la clé cryptographique et dudit code d'identification univoque ;
- de décryptage dudit code d'identification univoque en entrant le mot de passe personnel dans le dispositif mobile (14) pour obtenir le code d'identification univoque décrypté ;
- la comparaison dans le dispositif mobile (14) dudit code d'identification univoque décrypté avec ledit code d'identification univoque stocké dans le dispositif mobile (14) ;
- le stockage de la clé cryptographique dans le dispositif mobile (14) vers un second segment (32) du support de mémoire (18) lorsque ledit code d'identification univoque décrypté correspond audit code d'identification univoque stocké dans le dispositif mobile (14), et
- la transmission d'un signal d'activation réussie crypté avec la clé cryptographique et contenant certaines caractéristiques du dispositif mobile (14) à partir du dispositif mobile (14) vers le centre de service (10) ;
- le contrôle du signal d'activation réussie au niveau centre de service (10) ;
- la commande du dispositif mobile (14) à partir du poste de travail (12), ledit dispositif mobile (14) étant activé.

2. Procédé de gestion à distance de dispositifs mobiles selon la revendication 1, dans lequel la commande du dispositif mobile (14) comprend les étapes suivantes :
- la transmission du code d'accès depuis le poste de travail (12) vers le centre de service (10) ;
- la vérification de l'authenticité du code d'accès au niveau du centre de service (10) ;
- la sélection d'une tâche de gestion du dispositif mobile (14) et l'envoi de la tâche de gestion sélectionnée du poste de travail (12) vers le centre de service (10) ;
- la transmission d'un signal de commande crypté avec la clé cryptographique à partir du centre de service (10) vers le dispositif mobile (14), ledit signal de commande étant associé à la tâche de gestion du dispositif mobile (14) ;
- le décryptage du signal de commande crypté dans le dispositif mobile (14) avec la clé cryptographique ;
- l'interprétation et l'exécution automatique du signal de commande dans le dispositif mobile (14), réalisant ainsi l'activité de gestion de l'appareil mobile (14).

3. Procédé de gestion à distance de dispositifs mobiles selon la revendication 2, dans lequel un signal de commande crypté avec la clé cryptographique est associé à une tâche de gestion du dispositif mobile (14) destinée à être exécutée automatiquement lorsqu'il se produit un remplacement d'une première carte SIM de téléphone (16) avec une seconde carte SIM de téléphone (20) dans le dispositif mobile (14).

4. Procédé de gestion à distance de dispositifs mobiles selon la revendication 3, dans lequel la détection du remplacement de la carte SIM du téléphone comprend les étapes suivantes :
- la comparaison dans le dispositif mobile (14) du code IMSI mémorisé dans le premier segment (30) du support de mémoire (18), lors de son allumage, avec un deuxième code IMSI contenu dans la seconde carte SIM de téléphone (20) ;
- la vérification dans le dispositif mobile (14) si le code IMSI mémorisé dans le premier segment (30) du support de mémoire (18) est différent du second code IMSI contenu dans la seconde carte SIM de téléphone (20) ;
- la transmission d'un signal de changement de carte SIM, crypté avec la clé cryptographique, à partir du dispositif mobile (14) vers le centre de service (10), dans lequel ledit signal comprend le code d'identification univoque du dispositif mobile (14) et est associé à un second numéro de téléphone associé à ladite deuxième carte SIM de téléphone (20) ;
- le remplacement au centre de service (10) du premier numéro de téléphone associé à la première carte SIM du téléphone (16) avec le second numéro de téléphone associé à ladite seconde carte SIM de téléphone (20), à la fois ledit premier numéro de téléphone et ledit second numéro de téléphone étant associés au code d'identification univoque du dispositif mobile (14) ;
- le remplacement, dans le dispositif mobile (14), du premier code IMSI de la première carte SIM du téléphone (16) avec le deuxième code IMSI de la seconde carte SIM du téléphone (20) dans le premier segment (30) du support de mémoire (18) ;
- la transmission à partir du centre de service (10) du signal de commande crypté avec la clé cryptographique associé au mode de gestion préétablie du dispositif mobile (14) prévu pour le remplacement de la première carte SIM de téléphone (16) avec la seconde carte SIM de téléphone (20) ;
- le décryptage dans le dispositif mobile (14) du signal de commande crypté avec la clé cryptographique ;
- l'interprétation et l'exécution automatiquement dans le dispositif mobile (14) du signal de commande, réalisant ainsi l'activité de gestion du dispositif mobile (14).

5. Procédé de gestion à distance de dispositifs mobiles selon l'une quelconque des revendications précédentes, dans lequel le code d'accès comprenant un code d'identification, un mot de passe et un code de contrôle est disponible dans au moins l'un des modes de distribution, comportant une transmission en ligne, l'utilisation d'une carte physique ou un média supporté, ledit code d'accès étant adapté pour permettre un accès protégé au centre de service (10).

6. Procédé de gestion à distance de dispositifs mobiles selon l'une quelconque des revendications précédentes, dans lequel des signaux échangés entre le centre de service (10) et le dispositif mobile (14) sont encapsulés selon une norme radio mobile de communication asynchrone.

7. Procédé de gestion à distance de dispositifs mobiles selon la revendication 6, dans lequel les signaux échangés entre le centre de service (10) et le dispositif mobile (14) sont conformes à la norme Short Message Service (SMS).

8. Procédé de gestion à distance de dispositifs mobiles selon l'une quelconque des revendications précédentes, dans lequel des signaux échangés entre le centre de service (10) et le dispositif mobile (14) sont cryptés avec la clé cryptographique, ladite clé cryptographique étant unique pour chaque unique dispositif mobile (14).

9. Procédé de gestion à distance de dispositifs mobiles selon la revendication 1, dans lequel la demande de téléchargement du programme d'application client est envoyée par le dispositif mobile (14) par l'intermédiaire d'un SMS contenant un lien.

10. Procédé de gestion à distance de dispositifs mobiles selon la revendication 1, dans lequel le programme d'application client est distribué dans le dispositif mobile (14) en utilisant des mécanismes de distribution Over-The-Air.

11. Procédé de gestion à distance de dispositifs mobiles selon la revendication 1, dans lequel un message d'activation réussie est affiché lors de la vérification du signal d'activation réussie au centre de service (10).

12. Procédé de gestion à distance de dispositifs mobiles selon la revendication 1, dans lequel une demande d'activation du dispositif mobile (14) est ignorée dans un dispositif mobile (14) déjà activé.

13. Procédé de gestion à distance de dispositifs mobiles selon la revendication 1, dans lequel la demande d'activation est envoyée par le dispositif mobile (14).

14. Procédé de gestion à distance de dispositifs mobiles selon l'une quelconque des revendications précédentes, dans lequel les tâches de gestion des dispositifs mobiles comprennent un verrouillage par défaut du dispositif mobile (14), un déverrouillage du dispositif mobile (14), une suppression de données entrées dans le dispositif mobile (14), une sauvegarde de données dans le dispositif mobile (14), un avis de remplacement de la carte SIM du téléphone (16) par l'envoi d'un e-mail à une adresse mail, un avis de remplacement de la carte SIM de téléphone (16) grâce à l'envoi d'un SMS à un numéro de téléphone.

15. Procédé de gestion à distance de dispositifs mobiles selon la revendication 14, dans lequel les tâches de gestion des dispositifs mobiles comprennent en outre un mode de désactivation du dispositif mobile (14) prévoyant l'annulation de la clé cryptographique stockée dans le second segment (32) de la mémoire.

16. Procédé de gestion à distance de dispositifs mobiles selon la revendication 2, dans lequel l'exécution d'une commande dans le dispositif mobile (14) est signalée par les étapes suivantes :
- la transmission automatiquement du code de commande à partir du dispositif mobile (14) vers le centre de service (10) ;
- l'envoi à partir du centre de service (10) entre au moins un e-mail à une adresse mail préétablie et un SMS à un numéro de téléphone préétabli.

17. Procédé de gestion à distance de dispositifs mobiles selon les revendications 4 et 16, dans lequel le remplacement de la carte SIM (16) est signalé.

18. Procédé de gestion à distance de dispositifs mobiles selon la revendication 4, dans lequel une liste de cartes SIM ignorées par la détection du remplacement de la carte SIM de téléphone est stockée dans un troisième segment (34) du support de mémoire (18), ladite liste étant susceptible d'être mise à jour à partir du centre de service (10).

19. Procédé de gestion à distance de dispositifs mobiles selon l'une quelconque des revendications précédentes, dans lequel les signaux de commande cryptés sont reçus de manière silencieuse dans le dispositif mobile (14).

20. Procédé de gestion à distance de dispositifs mobiles selon l'une quelconque des revendications précédentes, dans lequel le programme d'application client n'est pas visible dans la liste des applications installées dans le dispositif mobile (14).

21. Dispositif mobile pour la mise en oeuvre du procédé de gestion à distance de dispositifs mobiles selon l'une quelconque des revendications précédentes, **caractérisé en ce qu'**il comprend des moyens adaptés pour décrypter un signal de commande crypté transmis par un centre de service (10), et des moyens adaptés pour interpréter ledit signal de commande décrypté et exécuter ladite commande.

22. Dispositif mobile selon la revendication 21, dans lequel une clé cryptographique pour crypter et décrypter des signaux est stockée dans un segment (32) d'un support de mémoire (18) lors de l'activation, ladite clé cryptographique étant générée de manière unique par le centre de service (10).
